## (19) Europäisches Patentamt
## European Patent Office
## Office européen des brevets

(11) **EP 1 233 893 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(21) Anmeldenummer: **01911414.9**

(22) Anmeldetag: **02.02.2001**

(51) Int Cl.⁷: **B60T 8/00**

(86) Internationale Anmeldenummer:
**PCT/DE2001/000395**

(87) Internationale Veröffentlichungsnummer:
**WO 2001/066394 (13.09.2001 Gazette 2001/37)**

(54) **VERFAHREN UND VORRICHTUNG ZUR STEUERUNG EINER BREMSANLAGE**

METHOD AND DEVICE FOR CONTROLLING A BRAKE SYSTEM

PROCEDE ET DISPOSITIF POUR ASSURER LA COMMANDE D'UN SYSTEME DE FREINAGE

(84) Benannte Vertragsstaaten:
**DE FR GB**

(30) Priorität: **08.03.2000 DE 10011269**

(43) Veröffentlichungstag der Anmeldung:
**28.08.2002 Patentblatt 2002/35**

(73) Patentinhaber: **ROBERT BOSCH GMBH**
**70442 Stuttgart (DE)**

(72) Erfinder:
- **ERBAN, Andreas**
**74321 Bietigheim-Bissingen (DE)**
- **RADER, Thomas**
**72764 Reutlingen (DE)**
- **HAEUSSLER, Alexander**
**69117 Heidelberg (DE)**
- **GERDES, Manfred**
**71739 Oberriexingen (DE)**
- **GUTMANN, Ralf**
**74249 Jagsthausen (DE)**
- **GLASSTETTER, Thomas**
**75038 Oberderdingen (DE)**

(56) Entgegenhaltungen:
DE-A- 4 114 734       DE-A- 19 616 732
US-A- 5 229 944       US-A- 5 577 812

**Beschreibung**

Stand der Technik

Die Erfindung betrifft ein Verfahren und eine Vorrichtung zur Steuerung einer Bremsanlage.

Aus der DE 196 16 732 A1 ist ein Steuersystem einer Bremsanlage bekannt, bei welcher abhängig von einer Fahrervorgabe und/oder einer entsprechenden Vorgabe eines Regelsystems, beispielsweise eines adaptiven Fahrgeschwindigkeitsreglers (ACC), ein Sollwert für die Steuerung der Bremsanlage vorgeben wird, vorzugsweise eine Bremsmomentensollwert, der auf die einzelnen Bremskreise bzw. Radbremsen verteilt wird. Im beschriebenen Ausführungsbeispiel wird dieser Sollwert von einem Verzögerungsregler gebildet, welcher die Fahrzeugverzögerung auf einen vom Fahrer und/oder dem wenigstens einen weiteren Regelsystem vorgegebenen Verzögerungssollwert fuhrt. Die auf die einzelnen Bremskreise bzw. Radbremsen verteilten Bremsmomentensollwerte werden dann mittels Bremsmomentenregler eingeregelt. Bei der Verteilung des Sollbremsmoments auf die einzelnen Bremskreise bzw. Radbremsen wird davon ausgegangen, dass die an den Radbremsen eingestellten Bremsdrücke oder eine andere verwendete Steuergröße in den einzelnen Bremskreisen bzw. Radbremsen den gleichen Wert aufweisen (unter der Voraussetzung des gleichen Sollwerts).

In der Veröffentlichung SAE-paper 950759 "VDC, the vehicle dynamics control system of Bosch" von Anton van Zanten, Rainer Erhardt und Georg Pfaff wird ein Steuersystem für eine Bremsanlage beschrieben, in welchem ein Sollbremsmomentenwert in einen Sollbremsdruck für eine Radbremse mittels eines Hydraulikmodells in Ansteuersignale zur Steuerung der der Radbremse zugeordneten Ventilanordnung umgesetzt werden. Dadurch wird an jeder Radbremse das gewünschte Bremsmoment bzw. der gewünschte Bremsdruck eingestellt. Das verwendete Hydraulikmodell dient ferner dazu, ausgehend von den Ansteuersignalen für die Ventilanordnung den Bremsdruck in der Radbremse bzw. die dort ausgeübte Bremskraft oder das Bremsmoment zu ermitteln.

In der DE 41 14 734 A1 wird eine Schaltungsanordnung für ein Fahrzeug mit elektronischer Blockierschutzeinrichtung beschrieben, bei der aus Druckabbausignalen einen die Druckdifferenz an den beiden Rädern einer Achse wiedergebenden Wert ermittelt wird. Weiterhin wird in Abhängigkeit von der Druckdifferenz eine Beschränkung des Giermoments durchgeführt.

Vorteile der Erfindung

Durch die Berücksichtigung der Abweichungen in den einzelnen Bremskreisen bzw. Radbremsen bei der Verteilung des Sollwertes (vorzugsweise Bremsmoment) auf die einzelnen Bremskreise bzw. Radbremsen werden Toleranzen bei der Umsetzung in Ansteuersignale für die Bremsensteller berücksichtigt und wirksam ausgeglichen.

In vorteilhafter Weise wird die Gleichheit des Bremsdruckniveaus an den einzelnen Bremskreisen bzw. Radbremsen hergestellt. Dies führt vorteilhafter Weise zu einer gleichmäßigen Abnutzung der Radbremsen und zur Vermeidung von unerwünschten Giermomenten während des Bremsvorgangs.

In vorteilhafter Weise werden nicht nur fertigungsbedingte Toleranzen im Bereich der Komponenten der Bremsanlage ausgeglichen, die zu unterschiedlichen Bremsdruckniveaus an den Radbremsen bzw. Bremskreisen führen. Weitere Größen, die ein entsprechendes Ergebnis nach sich ziehen, beispielsweise Steigungswiderstände, veränderte Fahrzeugmassen, zusätzliche Aufbauten am Fahrzeug oder einen Anhängerbetrieb des Fahrzeugs, haben durch die Differenzbildung keinen Einfluss auf die Schätzgüte.

Ferner wird eine Verbesserung des Komforts des Bremsvorgangs erreicht, da eine gleichmäßige Verteilung gewährleistet ist und keine unterschiedlichen Bremsenabnutzungen oder gar Giermomente auftreten.

Besonders vorteilhaft ist, dass bei der Korrektur der Bremsensteuerung nicht auf das Hydraulikmodell, mit dem der Sollwert in Ansteuergrößen umgerechnet wird und ein Istwert abhängig von den Ansteuergrößen gebildet wird, zurückgegriffen werden muss, so dass die durch Anwendung dieses Modells sich ergebenden Abweichungen infolge von z.B. Fertigungstoleranzen ebenfalls korrigiert werden.

Weitere Vorteile ergeben sich aus der nachfolgenden Beschreibung von Ausführungsbeispielen bzw. aus den abhängigen Patentansprüchen.

Zeichnung

Die Erfindung wird nachstehend anhand der in der Zeichnung dargestellten Ausführungsformen näher erläutert. Figur 1 zeigt dabei ein Übersichtsblockschaltbild einer Steuereinrichtung zur Steuerung der Bremsanlage eines Fahrzeugs, während in Figur 2 ein Ablaufdiagramm einer bevorzugten Ausführungsform des Steuersystems dargestellt ist. Figur 3 zeigt anhand eines Flussdiagramms eine bevorzugte Ausführung der Aufteilung von Sollbremsmomenten auf die Bremskreise.

Beschreibung von Ausführungsbeispielen

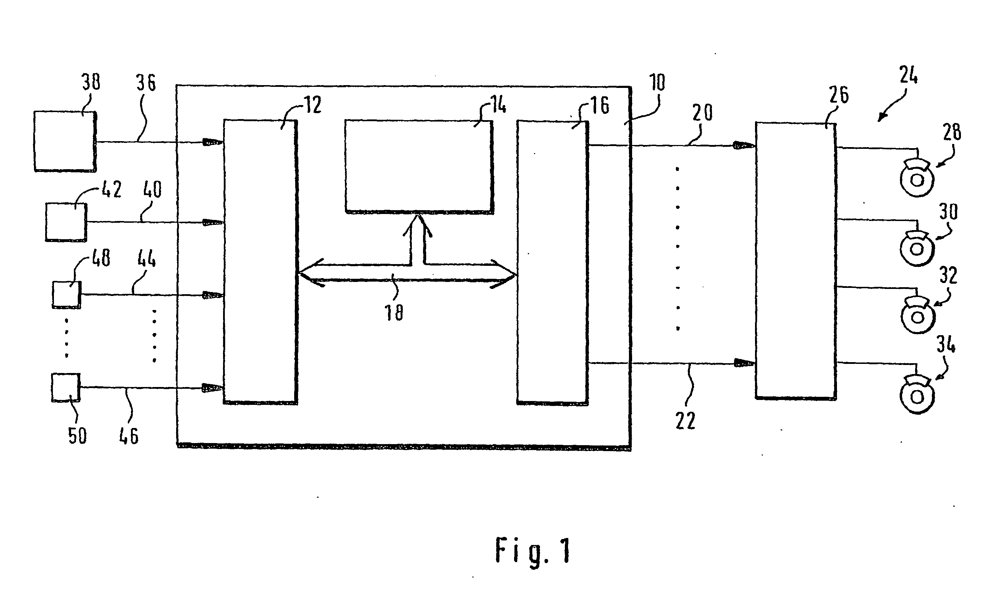

Figur 1 zeigt eine elektronische Steuereinheit (10), die über eine Eingangsschaltung (12), wenigstens einen Mikrocomputer (14) sowie eine Ausgangsschaltung (16) verfügt. Diese sind über ein Kommunikationssystem (18) zum gegenseitigen Daten- und Informationsaustausch miteinander verbunden. Über Ausgangsleitungen (20-22) steuert die elektronische Steuereinheit die Bremsanlage (24) eines Fahrzeugs. Diese stellt im bevorzugten Ausführungsbeispiel eine hydraulische Bremsanlage dar, welche über Pumpen- und Ventilanordnungen (26) verfügt, die die Bremskraft an den einzelnen Radbremsen (28, 30, 32 und 34) gemäß den über die Leitungen (20-22) zugeführten Signalen steuert. Derartige Bremsanlagen sind aus dem Stand der Technik bekannt. Der elektronischen Steuereinheit (10) werden ferner Eingangsleitungen zugeführt, die im bevorzugten Ausführungsbeispiel in einem Bussystem (z. B. CAN) zusammengefügt sind. Eine erste Eingangsleitung (36) führt von einer Fahrgeschwindigkeitsregeleinrichtung (38) zur Steuereinheit (10), während eine weitere Eingangsleitung (40) von einem Bremspedal (42) zur Steuereinheit (10) geführt wird. Von der Fahrgeschwindigkeitsregeleinrichtung (38) wird eine die Sollverzögerung repräsentierende Größe oder eine Größe, aus der eine Sollverzögerung ableitbar ist, zugeführt, während über die Eingangsleitung (40) vom Bremspedal (42) ein Maß für dessen Betätigungsgrad (Weg, Kraft, Druck, etc.) zugeführt wird. Ferner sind Eingangsleitungen (44-46) vorgesehen, die von Meßeinrichtungen (48-50) ausgehen und weitere Betriebsgrößen der Bremsanlage, des Fahrzeugs oder dessen Antriebseinheit wie beispielsweise Raddrehzahlen, Motordrehzahl, eingestellte Bremskraft (Bremsdruck), etc. zuführen.

Die zur Steuerung der Bremsanlage durchzuführende Steuerfunktionen sind als Programme im Mikrocomputer (14) implementiert. Neben den bekannten Funktionen wie Antiblockierregler (ABS), Antriebsschlupfregler (ASR), oder dem eingangs genannten Fahrdynamikregler steuert die Steuereinheit (10) in einem bevorzugten Ausführungsbeispiel die Bremskraft an den Radbremsen abhängig vom Fahrerwunsch oder wenigstens eines anderen Regelsystems, z.B. einem Fahrgeschwindigkeitsregler. Aus dem Betätigungsgrad des Bremspedals wird ein Sollverzögerungswert für das Fahrzeug auf der Basis von Berechnungen, Kennlinien und Kennfeldern ermittelt. Dieser Sollwert wird mit dem Verzögerungsistwert verglichen, und einem Regler zugeführt, der nach der vorbestimmten Regelstrategie ein Ausgangssignal erzeugt, welches ein einzustellendes Bremsmoment an den Radbremsen repräsentiert und derart bemessen ist, daß sich die Istverzögerung an die Sollverzögerung annähert. Im bevorzugten Ausführungsbeispiel wird der vom Regler ermittelte Bremsmomentenwert im Rahmen von Bremsmomentenregelungen an jeder Radbremse durch entsprechende Steuerung der Ventil- und Pumpenanordnungen 26 eingestellt. Der Fahrgeschwindigkeitsregler, insbesondere ein Fahrgeschwindigkeitsregler, der mit einem Abstandsradar zusammenarbeitet, gibt zur Verringerung der Geschwindigkeit und zum Einhalten der Sollgeschwindigkeit bzw. eines minimalen Abstandes einen Bremseneingriff vor. Dazu sendet der Fahrgeschwindigkeitsregler der Steuereinheit (10) ein Sollverzögerungssignal oder Größen, aus der ein solches Signal ableitbar ist, welches im Rahmen der oben beschriebenen Regelungen durch Betätigen der Radbremsen eingestellt wird. Der Fahrgeschwindigkeitsregler (38) kann dabei auch Bestandteil der Steuereinheit (10) sein und als Programme im Mikrocomputer (14) implementiert sein.

Im bevorzugten Ausführungsbeispiel wird als Bremsanlage eine hydraulisch gesteuerte Bremsanlage verwendet. Die erfindungsgemäße Lösung ist jedoch nicht nur auf diesen Anwendungsfall beschränkt, sondern wird mit den genannten Vorteilen auch bei pneumatischen Bremsanlagen oder elektromotorisch betätigten Radbremsen eingesetzt, wobei bei letzteren nicht Bremsdrücke, sondern andere Steuergrößen (z.B. Ströme, etc.) eine Rolle spielen.

Wie eingangs erwähnt werden bei rechnergesteuerten Bremseingriffen des wenigstens einen anderen Regelsystems oder bei fahrervorgabeabhängigen Bremseingriffen davon ausgegangen, dass die Bremsdrücke bei gleichen Sollwerten in den Bremskreisen bis zu einem bestimmten Druckniveau gleich sind. Die Istbremsdrücke in der Radbremse werden mittels des Hydraulikmodells anhand der Ansteuergröße der Ventilanordnungen berechnet. Durch fertigungsbedingte Toleranzen im Hydraulikaggregat treten jedoch Fehler in der Druckschätzung durch das Hydraulikmodell auf. Die Druckschätzung ist aber Basis für die Druckeinstellung. Bei einem abweichenden Verhalten der hydraulischen Komponenten weicht der tatsächlich am Rad anliegende Druck vom berechneten ab. Dadurch kommt es aufgrund der unterschiedlichen Drücke zu unerwünschten Auswirkungen auf das Fahrzeugverhalten, insbesondere zum Überbremsen eines einzelnen Bremskreises. Da ein größerer Prozentsatz des Bremseneingriffs über diesen Kreis geleistet wird, führt dies auf Dauer zu einer stärkeren Abnutzung der Bremse, bei diagonal aufgeteilten Bremskreisen sogar zu einem unerwünschten Giermomentenaufbau. Daher wird auf der Basis von der bereits vorhandenen Sensorik bzw. daraus abgeleiteten Größen, wie sie beispielsweise im eingangs genannten Stand der Technik beschrieben sind, der Differenzdruck zwischen den einzelnen Bremskreisen bzw. einzelnen Radbremsen berechnet. Der Bremseneinstellung wird dann ein Differenzdruckregelkreis unterlagert, der den Differenzdruck auf einen vorgegebenen Wert, insbesondere den Wert Null regelt, indem er die Verteilung des Sollmoments auf die einzelnen Bremskreise korrigiert. Dadurch werden unerwünschte Effekte, wie das Überbremsen einzelner Kreise oder ein Giermomentenaufbau, vermieden.

Durch die Berechnung des Differenzdrucks zwischen den Bremskreisen bzw. den einzelnen Radbremsen werden mögliche Fehlerquellen wie Steigungswiderstände, veränderte Fahrzeugmassen, Aufbauten am Fahrzeug oder Hängerbetrieb ausgeschaltet. Bei Auftreten von Differenzdrücken wird beim Bremseneingriff durch entsprechende Korrektur der Bremsenverteilung den oben genannten Beeinträchtigungen entgegengewirkt.

Die Schätzung des Differenzdrucks zwischen den einzelnen Bremskreisen bzw. Radbremsen basiert auf der beispielsweise im eingangs genannten Fahrdynamikregelsystem zur Verfügung stehenden Sensorik. Dabei wird der Bremsdruck in den einzelnen Bremskreise bzw. Radbremsen unabhängig von dem ggf. eingesetzten Hydraulikmodell berechnet.

Dabei werden als Größen das an dem Antriebsrad wirkende Motormoment MKAHALB, die Radgeschwindigkeiten VRADXY, die Radaufstandskräfte FNXY sowie fahrzeugspezifische Parameter wie Achsgeometrien, Reifenkennwerte und Bremsenkennwerte berücksichtigt. Im Bereich kleiner und mittlerer Verzögerungen kann bei der Schätzung die Dynamik des Bremsvorgangs vernachlässigt werden und auf einen additiven Ansatz reduziert werden.

Die Berechnung des Istbremsdruckes findet für den Fall eines angetriebenen Rades gemäß der folgenden Gleichung statt:

$$PRAD = CLAM/CP\ (\lambda{*}FN{*}RRAD + MKAHALB/CLAM)$$

Dabei stellen die Parameter CLAM, welcher die Reifenlängssteifigkeit repräsentiert, CP, welcher die Umsetzung des Bremsdrucks in die Bremskraft beschreibt (Bremsenkennwert), sowie der Radradius RRAD Konstanten dar, die im Falle des Radradius und des Bremsenkennwertes auch adaptierbar sind. $\lambda$ repräsentiert den Radschlupf des Rades, welcher in bekannter Weise aus Radgeschwindigkeit und Fahrzeuggeschwindigkeit als relative Abweichung der Radgeschwindigkeit von der Fahrzeuggeschwindigkeit bestimmt wird. FN ist die Radaufstandskraft, die entweder gemessen oder aus anderen Größen abgeschätzt wird. MKAHALB ist das dem angetriebenen Rad zugeführte Drehmoment. Dieses wird bestimmt aus dem von der Antriebseinheit des Fahrzeugs abgegebenen Motormoment unter Berücksichtigung von Getriebeübersetzung und Wirkungsgrad des Antriebsstrangs, wobei das dann gebildete Drehmoment halbiert das dem einzelnen Antriebsrad zugeführte Drehmoment repräsentiert. Im Falle eines nicht angetriebenen Rades fällt der additive Term in der oben genannten Gleichung ersatzlos weg.

Auf die dargestellte Weise wird der Bremsdruck an einem Rad des ersten und an einem Rad des zweiten Bremskreises bestimmt (bei diagonaler Aufteilung vorzugsweise an Rädern derselben Achse, unter Berücksichtigung der achsweise Verteilung bei anderer Bremskreisaufteilung) und die Differenz zwischen den beiden ermittelten Bremsdrücken gebildet. Dies ergibt eine Druckdifferenz zwischen den Bremskreisen, in deren Abhängigkeit die Verteilung des Sollmoments auf die einzelnen Kreise korrigiert wird. Der gebildete Differenzdruck stellt die Eingangsgröße für einen unterlagerten Differenzdruckregler dar, der die Differenz zwischen den Bremsdrücken in den einzelnen Bremskreisen vorzugsweise auf Null reduziert, indem er die Verteilung des Sollmoments auf die einzelnen Bremskreise oder Achsen entsprechend korrigiert.

Die Berechnung der Istbremsdrücke erfolgt je nach Anwendungsbeispiel entweder lediglich an ausgewählten Radbremsen oder an allen Radbremsen, wobei dann die größte Differenz (unter Beachtung der achsweise Verteilung) zwischen den Bremskreisen der Regelung zugrunde liegt. Ferner werden in einem vorteilhaften Ausführungsbeispiel die Differenzdrücke zwischen den einzelnen Radbremsen berechnet und mittels des Differenzdruckreglers die Aufteilung der Sollmomente auf die einzelnen Radbremsen entsprechend korrigiert, so dass die Differenz zu der jeweils anderen Radbremse bzw. den anderen Radbremsen einen vorgegebenen Wert (unter Berücksichtigung der achsweisen Verteilung), vorzugsweise Null, annimmt.

Im obigen Ausführungsbeispiel ist die Bestimmung des Differenzdrucks auf der Basis von Bremsdruckwerten beschrieben. In entsprechender Weise erfolgt in anderen Ausführungsbeispielen die Differenzenbildung auf der Basis von Bremskraft- bzw. Bremsmomentenwerten, wobei in diesem Fall der unterlagerte Regelkreis dann ein Differenzbremskraft- bzw. Differenzbremsmomentenregler ist.

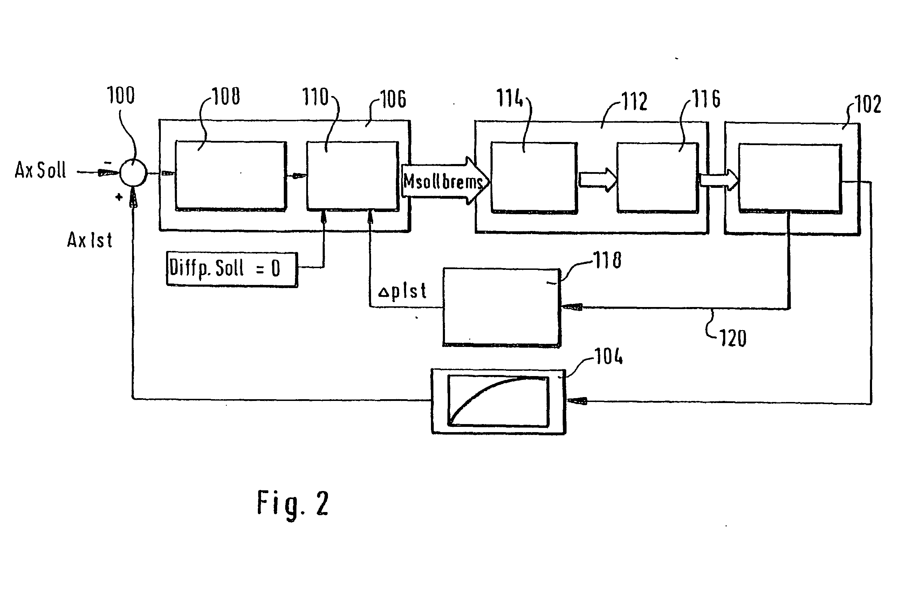

Figur 2 zeigt ein Ablaufdiagramm der Realisierung eines Bremseneingriffs im Rahmen einer Verzögerungsregelung mit einem unterlagerten Differenzdruckregelkreis. Die Blöcke stellen dabei die einzelnen Programme oder Programmschritte dar, die Verbindungslinien den Informationsfluss.

Dem in Figur 2 dargestellten Regelsystem wird entweder von wenigstens einem externen Regelsystem, beispielsweise einem adaptiven Fahrgeschwindigkeitsregelsystem, und/oder abgeleitet aus dem Betätigungsgrad des Bremspedals durch den Fahrer ein Sollwert für die Längsverzögerung des Fahrzeugs AXSOLL zugeführt. Dieser wird in einer Vergleichsstelle 100 mit einer Größe verglichen, welche der tatsächlichen Verzögerung des Fahrzeugs entspricht (AXIST). Im bevorzugten Ausführungsbeispiel wird die Istlängsverzögerung des Fahrzeugs, welche symbolisch als Block 102 dargestellt ist, auf der Basis von Radgeschwindigkeitssignalen beispielsweise aus der zeitlichen Ableitung wenigstens einer Radgeschwindigkeit bestimmt. Die auf diese Weise ermittelte Längsverzögerung des Fahrzeugs wird mittels eines Filters 104, vorzugsweise eines Tiefpaßfilters gefiltert und der Vergleichsstelle 100 zugeführt.

Die Abweichung zwischen Soll- und Istverzögerung wird dem Reglersystem 106 zugeführt. Dort wird zunächst durch den eigentlichen Verzögerungsregler 108 abhängig von der Abweichung zwischen den Verzögerungswerten nach Maßgabe einer vorgegebenen Reglerstrategie, beispielsweise die im eingangs genannten Stand der Technik, ein Sollbremsmomentenwert ermittelt. Dieser wird nach Maßgabe eines vorgegebenen Schlüssels, beispielsweise im Hinblick auf eine geeignete, die Fahrzeugstabilität sichernde Aufteilung zwischen Vorder- und Hinterachsbremsen auf die einzelnen Radbremsen verteilt. Beispielsweise wird das gesamte Sollbremsmoment zu 60 % auf die Vorderachsbremsen, zu 40 % auf die Hinterachsbremsen und innerhalb einer Fahrzeugachse zu gleichen Teilen auf die einzelnen Radbremsen der linken und rechten Räder verteilt. Ergebnis der Bremsmomentenverteilung sind Sollbremsmomente MSOLLXY für jede Radbremse des Fahrzeugs. Die Verteilung des Bremsmoments auf die einzelnen Radbremsen findet im Verteiler 110 statt, in dem ferner der oben genannte Differenzdruckregler realisiert ist. Dem Verteiler 110 wird der Differenzdrucksollwert DIFFPSOLL, der vorzugsweise 0 ist, zugeführt, sowie ein Istwert $\Delta$PIST, der den Differenzdruck zwischen ausgewählten Radbremsen insbesondere der beiden Bremskreise übermittelt. Im einfachsten Ausführungsbeispiel besteht der Differenzdruckregler aus einem Vergleichsschritt, in dem überprüft wird, ob die Differenz zwischen dem Differenzdrucksollwert und dessen Istwert größer, gleich oder kleiner 0 ist. Abhängig vom Vergleichsergebnis wird der der Bremsmomentenverteilung zugrundeliegende Schlüssel um einen bestimmten Wert erhöht bzw. erniedrigt, um auf diese Weise den Istdifferenzdruck auf den Sollwert zu führen. In einem anderen Ausführungsbeispiel stellt der Differenzdruckregler einen Regler bereit, welcher nach Maßgabe einer vorgegebenen Regelstrategie in Abhängigkeit der Abweichung zwischen Soll- und Istdifferenzdruck ein Ausgangssignal erzeugt. Die Größe dieses Ausgangssignals bildet dann ein Maß für den Korrekturfaktor, mit dem der Faktor zur Aufteilung der Bremsmomente korrigiert wird. Die auf diese Weise ermittelten radindividuellen Bremsmomentenwerte MSOLLXY werden in 112 zusammengefaßten Stellgliedern übermittelt. Dort wird für jede Radbremse mittels eines Hydraulikmodells 114 entsprechend dem im eingangs genannten Stand der Technik vorgestellten die einzelnen Sollbremsmomentenwerte beispielsweise unter Berücksichtigung der Bremsenkennwert in Sollbremsdrücke umgewandelt, mit auf der Basis des Hydraulikmodells ermittelten Istbremsdrücken verglichen und nach Maßgabe der Abweichung Ansteuersignale gebildet, mit deren Hilfe die Ventilanordnungen 116, die jeder Radbremse zugeordnet sind, angesteuert werden. Dabei werden die Istbremsdrücke der einzelnen Radbremsen den vorgegebenen Bremssolldrücken angenähert.

Der Istwert für den Differenzdruck wird im Differenzdruckmodell 118 in Abhängigkeit von den oben genannten Fahrzeuggrößen (Leitung 120) nach Maßgabe der oben dargestellten Formel ermittelt, indem die Werte für mindestens je eines Rades zweier verschiedener Bremskreise miteinander verglichen werden.

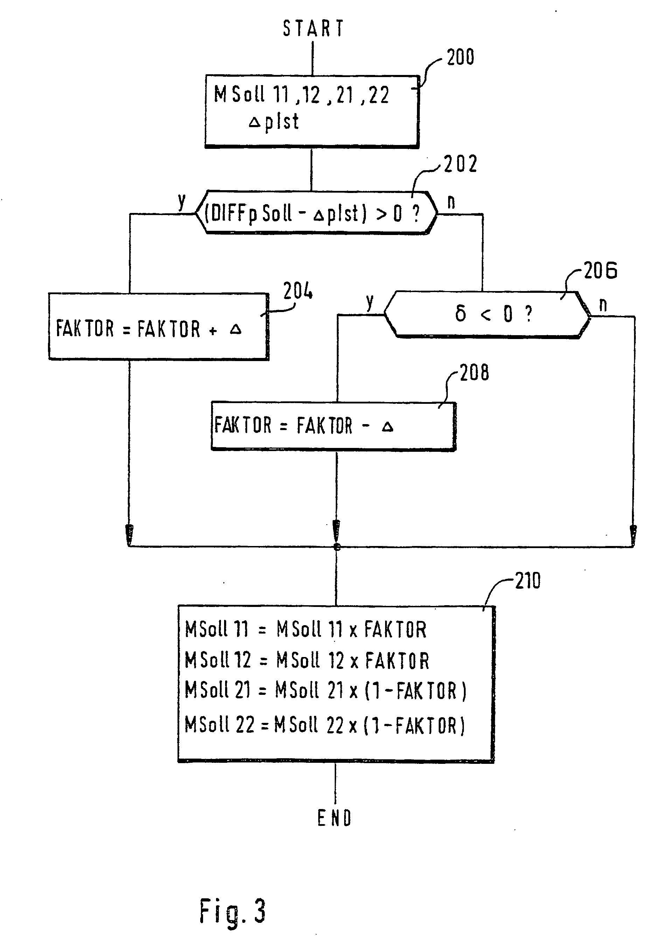

Im bevorzugten Ausführungsbeispiel wird die Differenzdruckregelung als Rechnerprogramm eines Mikrocomputers der Steuereinheit zur Steuerung der Bremsanlage ausgeführt. Figur 3 skizziert ein Flussdiagramm, welches eine bevorzugte Realisierung eines solchen Rechnerprogramms darstellt.

Das in Figur 3 skizzierte Programm wird in vorgegebenen Zeitintervallen durchlaufen. Im ersten Schritt 200 werden die einzelnen Sollmomenten MSOLL11, 12, 21, 22, wobei die erste Ziffer die Nummer des Bremskreises, die zweite Ziffer die der Radbremse in diesem Bremskreis repräsentiert. Eine ggf. achsweise vorgenommene Verteilung ist in diesen Werte bereits berücksichtigt. Ferner wird im Schritt 200 der Istwert der Druckdifferenz $\Delta$PIST, der nach Maßgabe des oben dargestellten Modells berechnet wurde, eingelesen. Im nächsten Schritt 202 wird die Differenz $\delta$ zwischen dem Sollwert der Druckdifferenz DIFPSOLL und dem Istwert $\Delta$PIST überprüft, ob sie größer als 0 ist oder nicht. Ist dies der Fall, wird im Schritt 204 ein Faktor um einen bestimmten Wert $\Delta$ erhöht. Ist die Soll-/Istdifferenz nicht größer 0, wird im Schritt 206 überprüft, ob sie kleiner 0 ist. Ist dies der Fall, wird im Schritt 208 der oben erwähnte Faktor um den Wert $\Delta$ reduziert. Hat Schritt 206 ergeben, dass die Soll-/Istabweichung auch nicht kleiner 0, sondern gleich 0 ist, so wird der Faktor unverändert beibehalten. Nach den Schritten 204, 208 und 206 im Falle einer Nein-Antwort wird im Schritt 210 die einzelnen Sollbremswerte mit dem im Schritt 204 bzw. 208 bestimmten Faktor korrigiert. Der Faktor ist dabei ein Wert zwischen 0 und 1 und stellt die Abweichung zwischen den Bremsdruckniveaus in den einzelnen Bremskreisen dar. Die Sollbremsmomente für die Radbremsen des ersten Bremskreises, MSOLL11 und MSOLL12 werden in dem in Figur 3 dargestellten Ausführungsbeispiel mit dem Faktor multipliziert. Die Sollmomente für die Radbremsen des zweiten Bremskreises werden mit der Größe 1-Faktor multipliziert. Auf diese Weise erfolgt eine Korrektur der Sollbremsmomentenwerte derart, dass sich ein Abgleich zwischen Solldifferenzdruck und Istdifferenzdruck einstellt. Nach Schritt 210 ist das Programm beendet und wird im nächsten Zeitintervall erneut durchlaufen.

**Patentansprüche**

1. Verfahren zur Steuerung einer Bremsanlage, wobei die Bremsanlage achsweise oder diagonal aufgeteilte Bremskreise aufweist,
   wobei jeder Radbremse (28, 30, 32, 34) ein elektrisch steuerbares Bremsenstellglied zugeordnet ist, welches in Abhängigkeit eines für jedes Rad vorgegebenen Sollwertes betätigt wird,
   wobei eine Istgröße, die die an jeder Radbremse (28, 30, 32, 34) wirkende Bremskraft repräsentiert, ermittelt wird,
   **dadurch gekennzeichnet, dass**

   - die Abweichung zwischen den Istgrößen wenigstens zweier Radbremsen (28, 30, 32, 34) zweier Bremskreise ermittelt wird und
   - abhängig von der Abweichung die Verteilung der Sollwerte für die Steuerung der Radbremsen (28, 30, 32, 34) auf die einzelnen Bremkreise derart korrigiert werden, dass die Abweichung einen vorgegebenen Wert, insbesondere den Wert Null, annimmt.

2. Verfahren nach Anspruch 1, **dadurch gekennzeichnet, dass** der Korrekturwert auf der Basis der Abweichung des Abweichungswertes der Istgrößen von einem vorgegebenen Sollabweichungswert ermittelt wird.

3. Verfahren nach einem der vorhergehenden Ansprüche, **dadurch gekennzeichnet, dass** der Abweichungswert auf der Basis von Fahrzeuggrößen berechnet wird.

4. Verfahren nach Anspruch 3, **dadurch gekennzeichnet, dass** die Fahrzeuggrößen Radschlupf und Aufstandskraft, ggf. das an das Rad aufgebrachte Antriebsmoment ist.

5. Verfahren nach einem der vorhergehenden Ansprüche, **dadurch gekennzeichnet, dass** die die Bremskraft repräsentierende Größe der Bremsdruck ist.

6. Verfahren nach einem der vorhergehenden Ansprüche, **dadurch gekennzeichnet, dass** die Sollwerte für die einzelnen Radbremsen nach Maßgabe eines Gesamtsollwertes gebildet werden, wobei die Verteilung des Gesamtsollwertes auf die einzelnen Räder abhängig von dem Abweichungswert korrigiert wird.

7. Verfahren nach Anspruch 6, **dadurch gekennzeichnet, dass** der Gesamtsollwert von einem Verzögerungsregler, der die Geschwindigkeit des Fahrzeugs auf einen vorgegebenen Sollwert regelt, ermittelt wird.

8. Verfahren nach einem der vorhergehenden Ansprüche, **dadurch gekennzeichnet, dass** der Bremsdruck abhängig von Fahrzeuggrößen nach Maßgabe der folgenden Gleichung bestimmt wird: PRAD = CLAM/CP ($\lambda$*FN*RRAD + MKAHALB/CLAM), wobei der additive Term im Falle eines nicht angetriebenen Rades entfällt.

9. Vorrichtung zur Steuerung einer Bremsanlage, wobei die Bremsanlage achsweise oder diagonal aufgeteilte Bremskreise aufweist,

- mit einer Steuereinheit (10), welche Ansteuersignale für Bremssteller erzeugt, die jeder Radbremse (28, 30, 32, 34) zugeordnet sind,
- wobei die Steuerung nach Maßgabe von für jede Radbremse (28, 30, 32, 34) vorgegebenen Vorgabewerten die Ansteuersignale ermitteln,

wobei eine die Bremskraft an der jeweiligen Radbremse (28, 30, 32, 34) repräsentierende Größe als Istgröße ermittelt wird,
**dadurch gekennzeichnet, dass**
ein Regler (10) vorgesehen ist, welcher die für jede Radbremse (28, 30, 32, 34) der einzelnen Bremskreise vorgegebenen Vorgabewerte derart in Abhängigkeit der Abweichung der Istgrößen wenigstens zweier Radbremsen (28, 30, 32, 34) wenigstens zweier Bremskreise korrigiert, dass die Abweichung einen vorgegebenen Wert, insbesondere den Wert Null, annimmt.

**Claims**

1. Method for controlling a brake system, the brake system having brake circuits which are divided on an axle basis or diagonally, an electrically controllable brake actuating element which is actuated as a function of a set point value which is predefined for each wheel being assigned to each wheel brake (28, 30, 32, 34), an actual variable which represents the brake force acting at each wheel brake (28, 30, 32, 34) being determined, **characterized in that**

- the difference between the actual variable for at least two wheel brakes (28, 30, 32, 34) of two brake circuits is determined, and
- the distribution of the set point values for the control of the wheel brakes (28, 30, 32, 34) is corrected to the individual brake circuits as a function of the difference in such a way that the difference assumes a predefined value, in particular the value zero.

2. Method according to Claim 1, **characterized in that** the correction value is determined on the basis of the difference between the difference value of the actual variables and a predefined set point difference value.

3. Method according to one of the preceding claims, **characterized in that** the difference value is calculated on the basis of vehicle variables.

4. Method according to Claim 3, **characterized in that** the vehicle variables are the wheel slip and contact force, if appropriate the drive torque applied to the wheel.

5. Method according to one of the preceding claims, **characterized in that** the variable representing the braking force is the brake pressure.

6. Method according to one of the preceding claims, **characterized in that** the set point values for the individual wheel brakes are formed in accordance with an overall set point value, the distribution of the overall set point value being corrected to the individual wheels as a function of the difference value.

7. Method according to Claim 6, **characterized in that** the overall set point value is determined by a deceleration regulator which regulates the speed of the vehicle to a predefined set point value.

8. Method according to one of the preceding claims, **characterized in that** the brake pressure is determined as a function of vehicle variables in accordance with the following equation: PRAD = CLAM/CP (λ*FN*RTAD + MKAHALB/CLAM), the additive term being omitted in the case of a wheel which is not driven.

9. Device for controlling a brake system, the brake system having brake circuits which are distributed on an axle basis or diagonally,

- having a control unit (10) which generates actuation signals for brake actuators which are assigned to each wheel brake (28, 30, 32, 34),
- the controller determining the actuation signals in accordance with predefined values which are predefined for each wheel brake (28, 30, 32, 34), a variable which represents the braking force at the respective wheel brake (28, 30, 32, 34) being determined as an actual variable, **characterized in that** a regulator (10) is provided which corrects the predefined values which are predefined for each wheel brake (28, 30, 32, 34) of the individual brake circuit as a function of the difference between the actual variables of at least two wheel brakes (28, 30, 32, 34) of at least two brake circuits in such a way that the difference assumes a predefined value, in particular the value zero.

**Revendications**

1. Procédé de commande d'un système de freinage, dans lequel le système de freinage présente des circuits de freinage séparés par essieu ou en diagonale, dans lequel chaque frein de roue (28, 30, 32, 34) est associé à un élément de réglage des freins pouvant être commandé électriquement, actionné en fonction d'une valeur de consigne prédéterminée pour chaque roue, dans lequel une grandeur réelle, qui représente la force de freinage appliquée au niveau de chaque frein de roue (28, 30, 32, 34) est déterminée, **caractérisé en ce que**

- l'écart entre les grandeurs réelles d'au moins deux freins de roue (28, 30, 32, 34) de deux circuits de freinage est déterminé et,
- en fonction de l'écart, la répartition des valeurs de consigne pour la commande des freins de roue (28, 30, 32, 34) sur les circuits de freinage individuels est corrigée de telle sorte que l'écart prend une valeur prédéterminée, en particulier la valeur zéro.

2. Procédé selon la revendication 1, **caractérisé en ce que** la valeur de correction est déterminée sur la base de l'écart entre la valeur d'écart des valeurs réelles et une valeur d'écart de consigne prédéterminée.

3. Procédé selon l'une des revendications précédentes, **caractérisé en ce que** la valeur d'écart est calculée sur la base de grandeurs relatives au véhicule.

4. Procédé selon la revendication 3, **caractérisé en ce que** les grandeurs relatives au véhicule sont le patinage des roues et la force de soulèvement, le cas échéant, le couple d'entraînement appliqué au niveau de la roue.

5. Procédé selon l'une des revendications précédentes, **caractérisé en ce que** la grandeur représentant la force de freinage est la pression de freinage.

6. Procédé selon l'une des revendications précédentes, **caractérisé en ce que** les valeurs de consigne pour les freins de roue individuels sont formées conformément à une valeur de consigne globale, la répartition de la valeur de consigne globale sur les roues individuelles étant corrigée en fonction de la valeur d'écart.

7. Procédé selon la revendication 6, **caractérisé en ce que** la valeur de consigne globale est déterminée par un régulateur de décélération qui règle la vitesse du véhicule sur une valeur de consigne prédéterminée.

8. Procédé selon l'une des revendications précédentes, **caractérisé en ce que** la pression de freinage est déterminée en fonction des grandeurs relatives au véhicule conformément à l'équation suivante : PRAD = CLAM/CP (λ*FN*RRAD + MKAHALB/CLAM), où le terme additif est laissé de côté dans le cas d'une roue non entraînée.

9. Dispositif de commande d'un système de freinage, dans lequel le système de freinage présente des circuits de freinage séparés par essieu ou en diagonale,

    - comportant une unité de commande (10) qui génère des signaux de commande pour des éléments de réglage des freins qui sont associés à chaque frein de roue (28, 30, 32, 34),
    - dans lequel la commande détermine les signaux de commande conformément aux valeurs par défaut prédéterminées pour chaque frein de roue (28, 30, 32, 34), où une grandeur représentant la force de freinage au niveau de chaque frein de roue (28, 30, 32, 34) est définie en tant que grandeur réelle,

    **caractérisé en ce qu'**
    il est prévu un régulateur (10), qui corrige pour chaque frein de roue (28, 30, 32, 34) des circuits de freinage individuels les valeurs par défaut prédéterminées en fonction de l'écart entre les grandeurs réelles d'au moins deux freins de roue (28, 30, 32, 34) d'au moins deux circuits de freinage, de telle sorte que l'écart prend une valeur prédéterminée, en particulier la valeur zéro.

Fig. 1

Fig. 2

EP 1 233 893 B1

START

200

M Soll 11 , 12 , 21 , 22
$\triangle$ p Ist

202

y     (DIFFp Soll $-$ $\triangle$ p Ist ) $> 0$ ?     n

204

FAKTOR = FAKTOR $+$ $\triangle$

206

y     $\delta < 0$ ?     n

208

FAKTOR = FAKTOR $-$ $\triangle$

210

MSoll 11 = M Soll 11 x FAKTOR

M Soll 12 = M Soll 12 x FAKTOR

M Soll 21 = M Soll 21 x ( 1 $-$ FAKTOR )

MSoll 22 = M Soll 22 x ( 1 $-$ FAKTOR )

END

Fig. 3